# EUROPÄISCHE PATENTSCHRIFT

(11) **EP 2 923 782 B1**
(45) Veröffentlichungstag und Bekanntmachung des Hinweises auf die Patenterteilung: **30.09.2020**
(21) Anmeldenummer: 15158453.9
(22) Anmeldetag: 10.03.2015
(51) Int. Cl.: B22F 3/11, B22F 3/26, B22F 5/00, C04B 38/00

(54) **VERFAHREN ZUR HERSTELLUNG OFFENZELLIGER KÖRPER**
METHOD FOR PRODUCING OPEN CELLED BODIES
PROCÉDÉ DE FABRICATION D'UN CORPS À ALVÉOLES OUVERTES

(30) Priorität: 26.03.2014 DE 102014205623
(43) Veröffentlichungstag der Anmeldung: 30.09.2015
(73) Patentinhaber: GLATT GMBH, 79589 Binzen (DE)
(72) Erfinder: Reinhardt, Peter, 02736 Beiersdorf (DE); Reger, Norman, 07639 Bad Klosterlausnitz (DE); Waag, Ulf, 79713 Bad Säckingen (DE)
(74) Vertreter: Pfenning, Meinig & Partner mbB

(56) Entgegenhaltungen:
- EP-A1- 0 087 789
- US-A- 4 076 888
- US-A- 5 409 375
- US-A- 5 614 307
- US-B1- 6 547 967

## Beschreibung

Die Erfindung betrifft ein Verfahren zur Herstellung offenzelliger Körper. Die Körper können dabei aus metallischen oder keramischen Werkstoffen hergestellt werden. Bei den offenen Zellen handelt es sich um tetrakaidekaederförmige Zellen, deren Wände mit Stegen gebildet sind. Die Flächen sind offen und bilden die Poren. Es besteht also ein Unterschied zwischen Zellengröße und Porengröße.

Eine Technologie zur Herstellung von metallischen und keramischen offenzelligen Strukturen oder Körpern nach dem sogenannten Schwartzwalder Verfahren ist Stand der Technik. Dabei wird bevorzugt ein offenzelliges Polyurethanschaumelement mit einer Metallpulver-Binder bzw. Keramikpulver-Binder Suspension beschichtet und anschließend mit einer Wärmebehandlung entbindert und gesintert. Bei der Entbinderung werden die organischen Komponenten, insbesondere durch Pyrolyse ausgetrieben. Diese Technologie ist zur ökonomischen Herstellung von flächigen offenzelligen Strukturen etabliert und in US 6,547,967 B1 oder EP 0 087 789 A1 beschrieben.

Besonders im Bereich der heterogenen Katalyse oder Synthese sind demgegenüber nunmehr schüttfähige im mm-Bereich kleindimensionierte offenzellige Strukturen oder Körper von Vorteil. Bisher werden diese aus flächigen Platten mechanisch oder durch Bestrahlung mit einem Energiestrahl herausgetrennt.

Besonders bei kleindimensionierten Körpern entsteht dabei ein erheblicher Aufwand. Für die Herstellung kleinteiliger offenzellige Körper mit einer Abmessung von 1cm x 1cm x 1cm werden beispielsweise 10.000 Teile mit einer Gesamtfläche von 1 m² aus plattenförmigen offenzelligen Halbzeugen durch ein Trennverfahren erhalten. Aus entsprechenden gesinterten Platten können sie z.B. durch Sägen, Drahterodieren, Wasserabrasivstrahltrennen und auch durch Elektronenstrahl- oder Laserstrahlschneiden erhalten werden. Diese Trennverfahren führen zu einem Werkstoffverlust und führen zu markanten Veränderungen an den Schneidkanten, die auch die Porosität in diesen Oberflächenbereichen nachteilig beeinträchtigen können. Die spezifische Oberfläche kann dort ebenfalls reduziert werden, was bei einem Einsatz als Katalysator oder Separator ungünstig ist. Bei mechanischen Trennverfahren treten an den Schneidkanten Verformungen der Stege eines offenzelligen Körpers auf, die Eigenschaften und die Oberflächengeometrie nachteilig beeinflussen. Infolge des Einsatzes thermischer Trennverfahren bei der Vereinzelung verändern sich der bereits gesinterte Werkstoff und die Oberfläche ebenfalls durch den Wärmeeintrag.

Bei einer angenommenen Schnittbreite von 0,5 mm bzw. 1 mm, die bei einem solchen bekannten Trennen auftritt, ergibt sich daraus ein Werkstoffvolumenverlust von 10 % bzw. 20%. Bei einer angestrebten Schwammabmessung von 0,8 cm x 0,8 cm x 0,8 cm des plattenförmigen Metallschwammelements ergibt sich ein Werkstoffvolumenverlust von 12,5 % bzw. 25%. Neben dem direkten Werkstoffverlust kommt zusätzlich ein Prozesszeitverlust hinzu, der bei der Beschichtung und Wärmebehandlung/Sinterung entsteht. Außerdem wird für die Wärmebehandlung/Sinterung entsprechend mehr Energie benötigt.

Der Zuschnitt der 10.000 Körper mit den Abmessungen von 1 cm x 1 cm x 1 cm entspricht einer Gesamtschnittlänge von 200 m. Bei zugrunde gelegten Schnittkosten von ca. 1 € pro Meter entstehen entsprechende Schnittkosten von 200 € je m² an zu trennendem Halbzeug.

Diese zusätzlichen Kosten erschweren die wirtschaftliche Herstellung kleindimensionierter offenzelliger Körper.

Außerdem ist es mit den bekannten Möglichkeiten nicht oder nur sehr aufwändig bestimmte Geometrien von offenzeligen Körpern herzustellen. Dies betrifft insbesondere solche, in denen Kanäle ausgebildet sind oder die für die Ausbildung von Kanälen geeignet sind.

Die US 4,076,888 A betrifft die Herstellung von metallischen und/oder metallkeramischen und/oder keramischen Schwämmen.

Aus US 5,409,375 A sind radiale Brenner aus porösem keramsichem Werkstoff bekannt.

Möglichkeiten für die Herstellung plattenförmiger Elemente, Seiten oder Folien sind in US 5,614,307 A beschrieben.

Aufgabe der Erfindung ist es, offenzellige Körper zur Verfügung zu stellen, die trotz kleiner Dimensionierung ökonomisch günstig herstellbar sind.

Erfindungsgemäß wird diese Aufgabe für ein Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäß hergestellten offenzelligen Körper sind aus einem metallischen oder keramischen Werkstoff gebildet. Sie sollten eine Dimensionierung aufweisen, bei der eine maximale Kantenlänge oder ein maximaler Außendurchmesser nicht größer als 20 mm, bevorzugt nicht größer als 15 mm ist. So kann ein Würfel als offenzelliger Körper Kantenlängen aufweisen, die maximal 20 mm bzw. maximal 15 mm lang sind.

Bei den erfindungsgemäß hergestellten Körpern ist die gesamte äußere Oberfläche unregelmäßig strukturiert und/oder sie ist durch keine mechanische, spanende und/oder thermische Bearbeitung erhalten worden, wie dies aber beim Stand der Technik der Fall ist.

Die erfindungsgemäß hergestellten Körper können bevorzugt als lose Schüttung eingesetzt werden. In dieser Form können sie für eine Synthese oder auch eine Separation, z.B. als Partikelabscheider, eingesetzt werden. Beim Einsatz für eine Synthese können die Körper mit mindestens einem katalytisch wirkenden Stoff, einer katalytisch wirkenden chemischen Verbindung und/oder einem katalytisch wirkenden chemischen Element gebildet und/oder an der Oberfläche damit beschichtet sein. Bei einer Beschichtung sollte auch der innere Bereich der Stege einer offenzelligen, porösen Struktur möglichst vollständig beschichtet sein.

So können die Körper für eine Fischer-Tropsch-Synthese aus oder mit Eisen und/oder Kobalt oder einer Legierung davon gebildet und/oder damit beschichtet sein.

Für andere katalytische Prozesse können die Körper auch aus Nickel, Eisen, Kobalt oder einer Legierung davon gebildet und /oder damit beschichtet sein.

Vorteilhaft sollten die Körper eine Porosität von mindestens 90 % und/oder eine physikalische Dichte von maximal 1,5 g/cm³ aufweisen.

Bei der Herstellung der Körper wird so vorgegangen, dass ein offenporöses Kunststoffelement mit vorgegebenen Sollbruchstellen, die die Größe und geometrische Gestalt herzustellender Körper unter Berücksichtigung der Schwindung bei einer Sinterung, berücksichtigen, eingesetzt werden.

Ein offenporöses Kunststoffelement wird mit einer Suspension, in der neben einer Flüssigkeit, einem organischen Binder mindestens pulverförmiger Werkstoff, mit dem die Körper hergestellt werden, enthalten sind, infiltriert und beschichtet.

Im Anschluss daran werden mit einer ersten Wärmebehandlung organische Komponenten ausgetrieben. Es ist möglich, vor dieser Wärmebehandlung eine Trocknung durchzuführen, um entsprechend einen Grünkörper aus dem Kunststoffelement zu erhalten. Anschließend an die erste Wärmebehandlung wird dann eine Sinterung durchgeführt, wobei nach der Sinterung das aus dem Kunststoffelement erhaltene offenzellige Element aus dem Werkstoff, mit dem die Körper gebildet sind, durch wirkende Kräfte an den Sollbruchstellen nach der Sinterung getrennt werden und dadurch in vereinzelter Form vorliegende Körper erhalten worden sind.

Teile aus porösem Kunststoff können in die jeweilige Suspension eingetaucht werden, um die Beschichtung und Infiltration zu erreichen. Dabei ist es vorteilhaft, die Teile zusammen zu pressen, so dass ihr Volumen verkleinert wird und bei der nachfolgenden Wiederausdehnung sich die Poren öffnen und vergrößern, wodurch die Aufnahme der Suspension in das Innere verbessert werden kann. Dieser Vorgang kann mehrfach wiederholt werden.

Bei Einsatz eines Kunststoffelementes, das bevorzugt plattenförmig ausgebildet ist, kann der Vorgang der Beschichtung ebenfalls durch ein Zusammenpressen unterstützt werden. Hierfür können Walzen eingesetzt werden, zwischen deren Spalt ein plattenförmiges Kunststoffelement hindurch geführt wird.

Bei den vorgegebenen Sollbruchstellen an einem Kunststoffelement sollte ein Steg mit einer Dicke von mindestens 0,5 mm eingehalten werden. Dadurch kann eine ausreichende Festigkeit bei der Bearbeitung, insbesondere der Beschichtung/Infiltration mit der Dispersion erreicht werden.

Die vorgegebenen Sollbruchstellen sollten aber auch ein Spaltmaß aufweisen, mit dem gesichert werden kann, dass ein Zusammensintern im Bereich der Sollbruchstellen vermieden werden kann. Der Spalt sollte hierzu eine Breite von mindestens 0,5 mm, bevorzugt 1,5mm bis in eine Tiefe von mindestens 25% der Plattendicke eines porösen Kunststoffelements ausgehend von einer Oberfläche des Kunststoffelements aufweisen. Bei einer Ausbildung von vorgegebenen Sollbruchstellen von zwei gegenüberliegenden Oberflächen kann die Tiefe jeweils die Hälfte der vorab angegebenen Tiefe betragen.

Bei der Erfindung können für die Herstellung der Körper Kunststoffelemente eingesetzt werden, bei denen die vorgegebenen Sollbruchstellen bereits bei der Herstellung solcher Kunststoffelemente, beispielsweise durch Einsatz entsprechend konturierter Formwerkzeuge, ausgebildet worden sind.

Es besteht aber auch die Möglichkeit, die Konturierung für die vorgegebenen Sollbruchstellen in einem plattenförmigen Kunststoffelement nachträglich auszubilden, indem Schaumwerkstoff entfernt oder abgetragen wird. Dies kann durch Schneiden, thermisch mittels Bestrahlung oder Prägen erreicht werden. Es kann ein Schneiden, Sägen, Fräsen, eine Laserbearbeitung, der Einsatz heißer Drähte (elektrisch widerstands beheizte Drähte) oder heißer Prägewerkzeuge genutzt werden. So kann beispielsweise ein gitterförmiges ausreichend erwärmtes Prägewerkzeug auf die Oberfläche eines Kunststoffelements gerichtet und damit Kunststoffwerkstoff in den Bereichen, in denen vorgegebene Sollbruchstellen ausgebildet werden sollen, entfernt werden.

Kunststoffelemente können aus Schäumen unterschiedlicher Kunststoffe, jedoch bevorzugt aus Polyurethan eingesetzt werden. Der Kunststoffschaum sollte dabei aber eine ausreichende Porosität und mittlere Porengröße aufweisen, die eine Beschichtung/Benetzung mit der Dispersion auch im Inneren des aus dem Schaum gebildeten Kunststoffelements ermöglichen.

Ein gesintertes Halbzeug, bei dem nach der Sinterung Sollbruchstellen ausgebildet sind, kann durch Einwirkung äußerer Kräfte zur Vereinzelung in einzelne voneinander vollständig getrennte Körper überführt werden. Bei sehr gut und sehr klein ausgeführten Sollbruchstellen kann bereits die Gravitationskraft ausreichen, um ein Auseinanderbrechen zu bewirken. Dabei kann das gesinterte Halbzeug über eine Kante geschoben werden und der dann frei schwebende Bereich einfach abbrechen. Es können aber auch ein oder mehrere Druckstempel eingesetzt werden, die auf eine Oberfläche wirken und ein Brechen an den Sollbruchstellen bewirken. Es ist auch der Einsatz einer oder mehrerer Walze(n) möglich, an der ein entsprechendes Halbzeug vorbei oder zwischen mehreren Walzen hindurch bewegt werden kann. Mehrere Walzen können dazu um Achsen gedreht werden, die nicht parallel zueinander ausgerichtet sind. Dadurch können Sollbruchstellen, die senkrecht zur Bewegungsrichtung des Halbzeugs und auch Sollbruchstellen, die in einem Winkel bis maximal 90 ° dazu geneigt ausgerichtet sind, gleichzeitig aufgebrochen und die Körper dadurch vereinzelt werden. Mehrere Walzen können dazu einen "Bogen" bilden.

Körper können in unterschiedlichen Geometrien hergestellt werden. Sie können beispielsweise zylinderförmig, dreieckig oder als Würfel oder Quader hergestellt werden. Bei der Herstellung unter Einsatz eines Kunststoffelements mit vorgegebenen Sollbruchstellen können zumindest annähernd gleich gestaltete und dimensionierte Körper als Würfel oder Quader erhalten werden. Dies ist wünschenswert, wenn solche zumindest annähernd gleichen Körper für eine bestimmte Anwendung gewünscht werden.

Es können auch Körper als Ringe, Kreisringe, Quadrate oder Mehrecke hergestellt werden. Werden beispielsweise zwei kreisringförmige Konturen für vorgegebene Sollbruchstellen mit unterschiedlichen Durchmessern ausgebildet, und dabei ein Kreisring im Inneren des anderen Kreisrings mit dem größeren Durchmesser angeordnet ist, können nach der Sinterung kreisförmige und kreisringförmige Körper erhalten werden. Dies trifft auch auf die unterschiedlichen mehreckigen Geometrien zu, bei denen mehreckige Körper und dazu entsprechend mehreckig geometrisch gestaltete Körper, die jeweils einen Rahmen um einen mehreckigen Körper darstellen können, hergestellt werden können. Solche unterschiedlich gestalteten Körper können nach der Sinterung und dem Durchtrennen der Sollbruchstellen erhalten werden.

Mit solchen Rahmen oder Kreisringen können dann Kanäle oder Kanäle bildende Körper zur Verfügung gestellt werden. So können beispielswiese Kreisringförmige oder rahmenförmige Körper in einer Reihenanordnung einen Kanal bilden. In dieser Form können sie im Inneren eines Rohres oder entsprechend gestalteten Gehäuses angeordnet werden. Kreisring- oder rahmenförmige Körper können so auch außen um ein Rohr oder ein Gehäuse angeordnet sein und dieses umschließen. Es besteht natürlich auch die Möglichkeit einer Kombination dieser Anordnungen mit Rohr bzw. Gehäuse innen und außen.

Es besteht auch die Möglichkeit, ein Kunststoffelement einzusetzen, dass an seiner Oberfläche eine Oberflächenkontur aufweist oder diese durch einen Werkstoffabtrag am Kunststoffelement ausgebildet worden ist. Eine Oberflächenkontur kann dabei eine von einer ebenen planaren Fläche abweichende geometrische Gestalt, beispielsweise mit Erhebungen oder Vertiefungen, die auch gewölbt oder abgerundet ausgebildet sind, aufweisen. Es können auch Absätze an einem Kunststoffelement ausgebildet sein, die unterschiedliche Höhen bzw. Dicken aufweisen können. Dadurch können offenzellige gesinterte Körper hergestellt werden die eine entsprechende Oberflächenkontur aufweisen, die lediglich durch die Schwindung beim Sintern beeinflusst ist. So besteht die Möglichkeit, offenzellige Körper mit Sollbruchstellen und/oder Oberflächenkonturen herzustellen.

Nachfolgend soll die Erfindung beispielhaft näher erläutert werden.

Dabei zeigt:

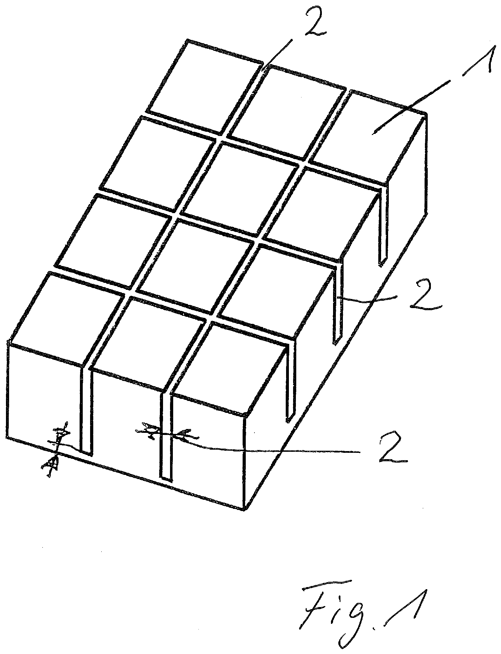

- Figur 1: eine perspektivische Darstellung eines Kunststoffelements aus einem Kunststoffschaum mit vorgegebenen Sollbruchstellen.

In Figur 1 ist ein poröses Kunststoffelement 1 gezeigt, in dem an einer Oberfläche durch einen Werkstoffabtrag oder bei der Herstellung des Kunststoffelements 1 vorgegebene Sollbruchstellen 2 in Form von jeweils senkrecht zueinander ausgerichteten Linien ausgebildet worden sind. Die vorgegebenen Sollbruchstellen 2 können auch andere geometrische Gestaltungen am Kunststoffelement 1 aufweisen.

### Beispiel 1 (nicht erfindungsgemäß):

Ein Polyurethanschwamm als poröser Kunststoff mit einer Abmessung von 200 mm x 200 mm, einer Dicke von 10 mm und einer Zellgröße von 1300 µm wurde mit einem Schneidmesser in 400 Würfel mit einer Kantenlänge von 10 mm x 10 mm x 10 mm getrennt. Diese 400 Würfel wurden mit einer Metallpulver-Binder-Suspension bestehend aus 80-Masse% AISI430-Metallpulver mit einer Partikelgröße d90 < 22 µm und 20-Masse-% einer 8%-igen wäßrigen PVA-Lösung benetzt und anschließend durch 2 Walzen mit einem Walzenabstand von 2mm mehrfach hintereinander hindurch geführt. Dadurch wurde eine homogene Beschichtung der Oberfläche des Kunststoffs im und am porösen Kunststoffelement erreicht, die zu einer mittleren Masse der einzelnen Würfel von jeweils 0,4 g führte. Nach einer Trocknung wurden die sogenannten Grünwürfel in einem Batchofen in einer Wasserstoffatmosphäre entbindert, also die organischen Komponenten entfernt. Im Nachgang dazu wurden die Würfel bei einer Temperatur von 1260°C gesintert. Anschließend wurden die gesinterten Würfel in einem rotierenden Behälter vereinzelt und entgratet. Die Würfel hatten nach dem Sintern eine mittlere Dichte von 0,5 g/cm³.

### Beispiel 2 (nicht erfindungsgemäß):

Ein Polyurethanschwamm mit einer Abmessung von 200 mm x 200 mm, einer Dicke von 10 mm und einer Zellgröße von 1900 µm wurde mit einem Schneidmesser in 400 Würfel mit einer Kantenlänge von 10 mm x 10 mm x 10 mm getrennt. Diese 400 Würfel wurden mit einer Keramikpulver-Binder-Suspension bestehend aus 60-Masse- % Al₂O₃ Pulver mit einer Partikelgröße d90 < 1 µm und 40-Masse-% einer 10%-igen wässrigen PVA-Lösung benetzt und anschließend durch zwei Walzen mit einem Walzenabstand von 1 mm mehrfach nacheinander hindurchgeführt. Dadurch wurde eine homogene Beschichtung erreicht die zu einem mittleren Würfelgewicht von 0,3 g führte. Nach einer Trocknung wurden die sogenannten Grünwürfel in einem Ofen entbindert und bei einer Temperatur von 1450°C als Würfelschüttung an Luft gesintert. Die Würfel hatten nach dem Sintern eine mittlere Dichte von 0,4 g/cm³.

### Beispiel 3:

Ein Polyurethanschwamm, als poröses Kunststoffelement 1 mit einer Zellgröße von 900 µm und einer Dicke von 8 mm wurde mit einem Heißdraht (elektrischer Widerstandsheizdraht) Spalte als vorgegebene Sollbruchstellen 2 herausgearbeitet. Dabei betrug die Spaltbreite 0,85 mm. Die Dicke der vorgegebenen Sollbruchstelle 2 betrug 1 mm. Die Abmessungen der nach Einbringen der vorgegebenen Sollbruchstellen 2 und Spalte der stehenbleiben Struktur wurde so gewählt, dass nach dem Sintern Körper mit den Abmessungen von 8 mm x 8 mm x 6 mm erhalten wurden.

Die so bearbeiteten Polyurethanschwämme wurden mit einer Metallpulver-Bindersuspension bestehend aus 85 Masse-% AISI316 Metallpulver mit einer Partikelgröße d₉₀ < 22 µm und einer 6 -%-igen wässrigen PVA Lösung benetzt und anschließend durch zwei Walzen mit einem Walzenabstand von 1mm mehrfach nacheinander hindurchgeführt. Dadurch wurde eine homogene Beschichtung erreicht, die zu einer mittleren Dichte von 0,3 g/cm³ führte. Nach einer Trocknung wurden die sogenannten würfelförmigen Grünkörper in einem Ofen entbindert und bei einer Temperatur von 1260°C in einer Wasserstoffatmosphäre im Batchofen gesintert. Nach der Sinterung wurden die Körper mit den Abmessungen von 8 mm x 8 mm x 6 mm an den vorgegebenen Sollbruchstellen aus der Platte gebrochen. Die würfelförmigen Körper hatten nach dem Sintern eine mittlere Dichte von 0,5 g/cm³.

### Beispiel 4:

Ein Polyurethanschwamm als Kunststoffelement 1 mit einer Zellgröße von 1200 µm und einer Dicke von 10 mm wurde mit einem Heißdraht Spalte als vorgegebene Sollbruchstellen 2 herausgearbeitet. Dabei betrug die Spaltreite 0,85 mm. Die Dicke der vorgegebenen Sollbruchstellen 2 betrug 1,5 mm. Die Abmessungen der nach Einbringen der vorgegebenen Sollbruchstellen 2 und Spalte stehenbleiben Struktur wurde so gewählt, dass nach dem Sintern Körper mit den Abmessungen von 10 mm x 10 mm x 6 mm erhalten werden konnten.

Der so bearbeitete Polyurethanschwamm wurde mit einer Metallpulver-Bindersuspension bestehend aus 85 Masse-% Fe23Cr6Al Metallpulver mit einer Partikelgröße d₉₀ < 22 µm und einer 6 -%-igen wässrigen PVA-Lösung benetzt und anschließend durch zwei Walzen mit einem Walzenabstand von 1 mm mehrfach nacheinander hindurchgeführt. Dadurch wurde eine homogene Beschichtung erreicht die zu einer mittleren Dichte des Grünkörpers von 0,4 g/cm³ führte. Nach einer Trocknung wurden die sogenannten Grünwürfel in einem Ofen entbindert und bei einer Temperatur von 1260°C in einem Batchofen und in Wasserstoffatmosphäre gesintert. Nach der Sinterung wurden die Körper mit den Abmessungen von 10 mm x 10 mm x 6 mm an den vorgegebenen Sollbruchstellen aus der Platte gebrochen . Die Würfel hatten nach dem Sintern eine mittlere Dichte von 0,5 g/cm³.

### Beispiel 5 (nicht erfindungsgemäß):

Ein Polyurethanschwamm mit einer Abmessung von 200 mm x 200 mm, einer Dicke von 10 mm und einer Zellgröße von 1000 µm der offenen Poren wurde mit einem Schneidmesser in 400 Würfel mit einer Kantenlänge von 10 mm x 10 mm x 10 mm getrennt. Diese 400 Würfel wurden mit einer Metallpulver-Binder-Suspension bestehend aus 80-Masse% Co-Metallpulver mit einer Partikelgröße d90< 10 µm und 20-Masse-% einer 8%-igen wässrigen PVA-Lösung benetzt und anschließend durch zwei Walzen mit einem Walzenabstand von 1 mm mehrfach hintereinander hindurch geführt. Dadurch wurde eine homogene Beschichtung der Oberfläche des Kunststoffs im und am porösen Kunststoffelement erreicht, die zu einer mittleren Masse der einzelnen Würfel von jeweils 0,5 g führte. Nach einer Trocknung wurden die sogenannten Grünwürfel in einem Batchofen in einer Wasserstoffatmosphäre entbindert, also die organischen Komponenten entfernt. Im Nachgang dazu wurden die Würfel bei einer Temperatur von 1350°C gesintert. Anschließend wurden die gesinterten Würfel in einem rotierenden Behälter vereinzelt. Die Würfel hatten nach dem Sintern eine mittlere Dichte von 0,7 g/cm³.

## Patentansprüche

1. Verfahren zur Herstellung offenzelliger Körper aus einem metallischen oder keramischen Werkstoff, bei dem
ein offenporöses Kunststoffelement (1) mit vorgegebenen Sollbruchstellen (2), die die Größe und geometrische Gestalt herzustellender Körper unter Berücksichtigung der Schwindung bei einer Sinterung, berücksichtigen,
mit einer Suspension, in der neben einer Flüssigkeit mindestens ein pulverförmiger Werkstoff, mit dem die Körper hergestellt werden, enthalten ist, infiltriert und beschichtet wird/werden; und
nach einer ersten Wärmebehandlung organische Komponenten ausgetrieben werden, und anschließend
eine Sinterung durchgeführt wird, bei der offenzellige Körper erhalten werden, wobei
nach der Sinterung das aus dem Kunststoffelement (1) mit vorgegebenen Sollbruchstellen (2) erhaltene offenzellige Element aus dem Werkstoff, mit dem die Körper gebildet sind, durch wirkende Kräfte an den Sollbruchstellen getrennt werden und
dadurch in vereinzelter Form vorliegende Körper erhalten worden sind.

2. Verfahren nach Anspruch 1, **dadurch gekennzeichnet, dass** an einem Kunststoffelement (1) vorgegebene Sollbruchstellen (2) durch einen Abtrag des Kunststoffwerkstoffs oder durch ein Trennverfahren ausgebildet werden.

3. Verfahren nach Anspruch 1 oder 2, **dadurch gekennzeichnet, dass** bei den vorgegebenen Sollbruchstellen (2) ein Steg mit einer Dicke von mindestens 0,5 mm eingehalten wird.

4. Verfahren nach einem der vorhergehenden Ansprüche, **dadurch gekennzeichnet, dass** der Werkstoffabtrag zur Ausbildung von vorgegebenen Sollbruchstellen (2) an einem Kunststoffelement (1) durch Schneiden, thermisch mittels Bestrahlung oder Prägen erreicht wird.

5. Verfahren nach einem der vorhergehenden Ansprüche, **dadurch gekennzeichnet, dass** der Werkstoffabtrag zur Ausbildung von vorgegebenen Sollbruchstellen (2) an einem Kunststoffelement (1) an einer Oberfläche des Kunststoffelements (1) durchgeführt wird.

6. Verfahren nach einem der vorhergehenden Ansprüche, **dadurch gekennzeichnet, dass** ein Kunststoffelement (1) eingesetzt wird, in dem vorgegebene Sollbruchstellen (2) ausgebildet sind oder ausgebildet werden, die unterschiedliche Geometrien aufweisen.

7. Verfahren nach einem der vorhergehenden Ansprüche, **dadurch gekennzeichnet, dass** ein Kunststoffelement (1) eingesetzt wird, in dem vorgegebene Sollbruchstellen (2) ausgebildet sind oder ausgebildet werden, mit denen ein kreisring- oder ein rahmenförmiger Körper eines Mehrecks nach dem Sintern und der Durchtrennung der Sollbruchstellen hergestellt werden.

8. Verrfahren nach einem der vorhergehenden Ansprüche, **dadurch gekennzeichnet, dass** die gesamte äußere Oberfläche durch keine mechanische, spanende und/oder thermische Bearbeitung erhalten wird.

9. Verfahren nach einem der vorhergehenden Ansprüche, **dadurch gekennzeichnet, dass** sie in einer Dimensionierung hergestellt werden, bei der eine maximale Kantenlänge oder ein maximaler Außendurchmesser nicht größer als 20 mm ist.

10. Verfahren nach einem der vorhergehenden Ansprüche, **dadurch gekennzeichnet, dass** die Körper mit mindestens einem katalytisch wirkenden Stoff, einer katalytisch wirkenden chemischen Verbindung und/oder einem katalytisch wirkenden chemischen Element gebildet und/oder an der Oberfläche damit beschichtet werden.

11. Verfahren nach einem der vorhergehenden Ansprüche, **dadurch gekennzeichnet, dass** die Körper aus Eisen, Kobalt, Nickel oder einer jeweiligen Legierung davon gebildet und/oder damit beschichtet werden.

12. Verfahren nach einem der vorhergehenden Ansprüche, **dadurch gekennzeichnet, dass** die Körper eine Porosität von mindestens 90 % und/oder eine physikalische Dichte von maximal 1,5 g/cm³ aufweisen.

13. Verfahren nach einem der vorhergehenden Ansprüche, **dadurch gekennzeichnet, dass** die Körper in Form eines Kreises, Kreisringes, eines Mehrecks und/oder eines rahmenförmigen Elements eines Mehrecks ausgebildet werden.

## Claims

1. Process for producing open-celled bodies composed of a metallic or ceramic material, wherein
an open-pored polymer element (1) with predetermined intended fracture positions (2) which take into account the size and geometric shape of bodies to be produced taking into account the shrinkage during sintering
is infiltrated and coated with a suspension in which a liquid and also at least one pulverulent material by means of which the bodies are produced are present; and
organic components are driven off after a first heat treatment and subsequently
sintering in which the open-celled bodies are obtained is carried out, where
after sintering the open-celled element obtained from the polymer element (1) having predetermined intended fracture positions (2) is separated from the material by means of which the bodies have been formed by exerting forces at the intended fracture positions and
bodies present in individualized form are obtained thereby.

2. Process according to Claim 1, **characterized in that** predetermined intended fracture positions (2) are formed on a polymer element (1) by removal of the polymer material or by means of a parting process.

3. Process according to Claim 1 or 2, **characterized in that** a web having a thickness of at least 0.5 mm is retained at the predetermined intended fracture positions (2) .

4. Process according to any of the preceding claims, **characterized in that** the removal of material for forming predetermined intended fracture positions (2) on a polymer element (1) is achieved by cutting, thermally by means of irradiation or embossing.

5. Process according to any of the preceding claims, **characterized in that** the removal of material for forming predetermined intended fracture positions (2) on a polymer element (1) is carried out on a surface of the polymer element (1).

6. Process according to any of the preceding claims, **characterized in that** a polymer element (1) in which predetermined intended fracture positions (2) which have different geometries have been formed or are formed is used.

7. Process according to any of the preceding claims, **characterized in that** a polymer element (1) in which predetermined intended fracture positions (2) by means of which a circular ring-shaped or frame-like body of a polygon is produced after sintering and parting of the intended fracture positions have been formed or are formed is used.

8. Process according to any of the preceding claims, **characterized in that** the entire outer surface is not obtained by any mechanical, cutting and/or thermal treatment.

9. Process according to any of the preceding claims, **characterized in that** the bodies are produced with dimensions where a maximum edge length or a maximum external diameter is not greater than 20 mm.

10. Process according to any of the preceding claims, **characterized in that** the bodies comprise at least a catalytically active material, a catalytically active chemical compound and/or a catalytically active chemical element and/or are coated on the surface therewith.

11. Process according to any of the preceding claims, **characterized in that** the bodies are formed by iron, cobalt, nickel or a respective alloy thereof and/or are coated therewith.

12. Process according to any of the preceding claims, **characterized in that** the bodies have a porosity of at least 90% and/or a physical density of not more than 1.5 g/cm³.

13. Process according to any of the preceding claims, **characterized in that** the bodies are in the form of a circle, circular ring, a polygon and/or a frame-like element of a polygon.

## Revendications

1. Procédé de fabrication de corps à alvéoles ouverts constitués d'un matériau métallique ou de type céramique, dans lequel
un élément en matière plastique à pores ouverts (1) avec des zones de rupture prédéterminées (2), qui prennent en compte la taille et la forme géométrique des corps à fabriquer en tenant compte du retrait lors d'un frittage,
est infiltré et revêtu avec une suspension dans laquelle, en plus d'un liquide, est contenu au moins un matériau pulvérulent avec lequel les corps sont fabriqués ; et
après un premier traitement thermique, des composants organiques sont éliminés puis
un frittage est effectué, dans lequel des corps à alvéoles ouverts sont obtenus, dans lequel
après le frittage, l'élément à alvéoles ouverts, obtenu à partir de l'élément en matière plastique (1) avec des zones de rupture prédéterminées (2), est séparé du matériau dont les corps sont constitués, par des forces agissant sur les zones de rupture prédéterminées et
ce qui permet d'obtenir des corps se présentant sous des formes individuelles.

2. Procédé selon la revendication 1, **caractérisé en ce que** les zones de rupture prédéterminées (2) sur un élément en matière plastique (1) sont réalisées par un enlèvement de la matière plastique ou par un procédé de séparation.

3. Procédé selon la revendication 1 ou 2, **caractérisé en ce que**, au niveau des zones de rupture prédéterminées (2), une connexion avec une épaisseur d'au moins 0,5 mm est maintenue.

4. Procédé selon l'une des revendications précédentes, **caractérisé en ce que** l'enlèvement de matière pour la formation de zones de rupture prédéterminées (2) sur un élément en matière plastique (1) est obtenu par découpe, thermiquement par irradiation ou par frappe.

5. Procédé selon l'une des revendications précédentes, **caractérisé en ce que** l'enlèvement de matière pour la formation de zones de rupture prédéterminées (2) sur un élément en matière plastique (1) est effectué sur une surface de l'élément en matière plastique (1).

6. Procédé selon l'une des revendications précédentes, **caractérisé en ce qu'**un élément en matière plastique (1) est utilisé dans lequel des zones de rupture prédéterminées (2) sont réalisées, qui présentent des géométries différentes.

7. Procédé selon l'une des revendications précédentes, **caractérisé en ce qu'**un élément en matière plastique (1) est utilisé dans lequel des zonezs de rupture prédéterminées (2) sont réalisées, avec lesquelles un corps de forme annulaire ou en forme de cadre d'un polygone est fabriqué après le frittage et la séparation au niveau des zones de rupture prédéterminées.

8. Procédé selon l'une des revendications précédentes, **caractérisé en ce que** l'ensemble de la surface externe n'est obtenue par aucun traitement mécanique, à enlèvement de copeaux et/ou thermique.

9. Procédé selon l'une des revendications précédentes, **caractérisé en ce qu'**ils sont fabriqués avec des dimensions dans lesquelles une longueur d'arête maximale ou un diamètre extérieur maximal n'est pas supérieur à 20 mm.

10. Procédé selon l'une des revendications précédentes, **caractérisé en ce que** les corps sont constitués d'au moins un matériau agissant comme un catalyseur, un composé chimique agissant comme un catalyseur et/ou d'un élément chimique agissant comme un catalyseur et/ou sont revêtus avec celui-ci sur leur surface.

11. Procédé selon l'une des revendications précédentes, **caractérisé en ce que** les corps sont constitués de fer, de cobalt, de nickel ou d'un alliage de ceux-ci et/ou en sont revêtus.

12. Procédé selon l'une des revendications précédentes, **caractérisé en ce que** les corps présentent une porosité d'au moins 90 % et/ou une densité physique de 1,5 g/cm³ maximum.

13. Procédé selon l'une des revendications précédentes, **caractérisé en ce que** les corps se présentent sous la forme d'un cercle, d'un anneau, d'un polygone et/ou d'un élément en forme de cadre d'un polygone.
